# FASCICULE DE BREVET EUROPEEN

(11) **EP 0 418 107 B1**
(45) Date de publication et mention de la délivrance du brevet: **09.06.1993**
(21) Numéro de dépôt: 90402341.3
(22) Date de dépôt: 22.08.1990
(51) Int. Cl.: F16H 63/30, F16H 63/20

(54) **Dispositif de commande d'une boîte de vitesses de véhicule automobile**
Steuerungsvorrichtung für das Schaltgetriebe eines Kraftfahrzeuges
Control device for the gear box of an automotive vehicle

(30) Priorité: 08.09.1989 FR 8911772
(43) Date de publication de la demande: 20.03.1991
(73) Titulaire: AUTOMOBILES PEUGEOT, 75116 Paris (FR); AUTOMOBILES CITROEN, 92200 Neuilly-sur-Seine (FR)
(72) Inventeur: Chrétien, Philippe, F-78430 Louveciennes (FR)
(74) Mandataire: Moncheny, Michel

(56) Documents cités:
- DE-B- 1 053 325
- DE-C- 922 508
- FR-A- 578 082
- FR-A- 2 299 562
- FR-A- 2 585 429
- FR-A- 2 615 798
- US-A- 2 906 139

## Description

La présente invention a peur objet un dispositif de commande d'une boîte de vitesses de véhicule automobile dans laquelle des éléments mobiles, qu il s'agisse des pignons baladeurs, des baladeurs ou des manchons de synchroniseur, sont déplacés à l'aide de crosses coulissantes parallèles suceptibles de coulisser selon une direction commune de coulissement dans au moins un sens à partir d'une position de point mort, chaque crosse comportant un évidement en forme de U dont les branches délimitent des faces parallèles d'engagement et/ou de dégagement de rapports qui sont perpendiculaires à la direction commune de coulissement des crosses, avec un doigt de commande dont l'extrémité libre est susceptible d'être reçue dans au moins l'un des dégagements pour coopérer avec ces faces et qui pivote pour provoquer le passage d'un rapport, ce doigt étant lié en rotation et en translation à un arbre de commande qui coulisse, perpendiculairement à la direction commune de coulissement des crosses, pour permettre l'engagement du doigt de commande dans au moins l'une des crosses en vue de la sélection d'au moins un rapport.

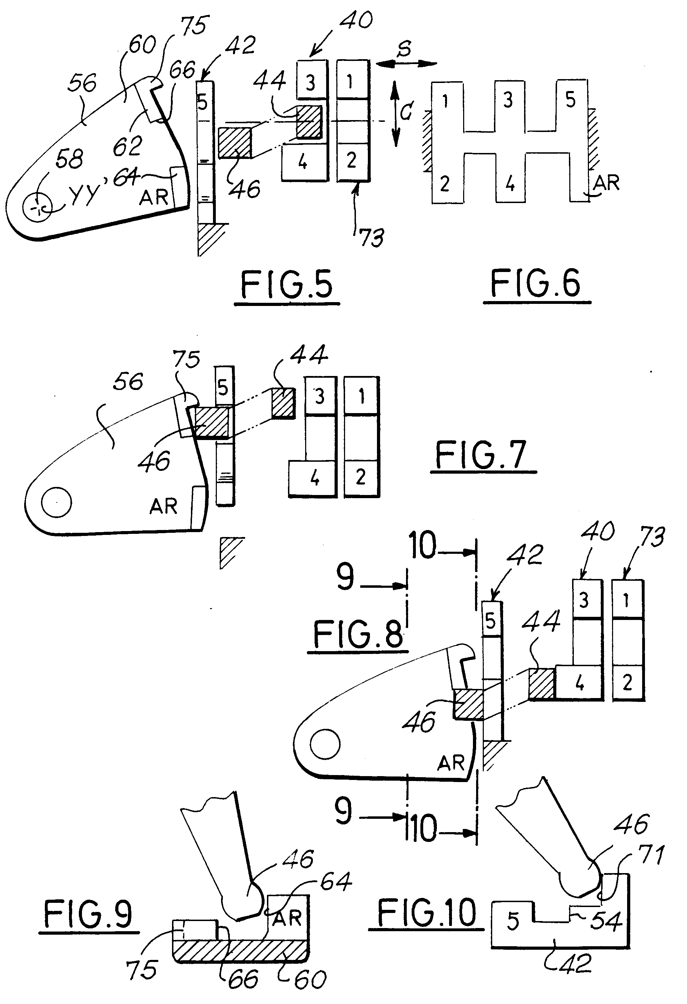

Dans le cas d'une boîte de vitesses à plusieurs rapports de marche avant, et notamment dans le cas d'une boîte à cinq vitesses, le levier de changement de vitesses à double oscillation se déplace selon une grille comportant plusieurs couloirs parallèles. La grille la plus logique pour une boîte à cinq vitesses est une grille à trois couloirs de sélection, telle qu'elle est représentée à la figure 6 de la présente demande, dans laquelle la marche arrière et le cinquième rapport de marche avant sont placés l'un en face de l'autre.

Cette grille est particulièrement compacte et permet un positionnement précis des couloirs de sélection des rapports 1-2 et 5-AR par des butées latérales franches, et du couloir central 3-4 par le dispositif classique de rappel de point mort.

Un inconvénient connu de cet agencement de grille de sélection est que les deux rapports 5 et AR étant placés sur la même ligne de sélection, l'engagement de l'un de ces deux rapports entraîne un déplacement parasite de l'autre rapport. Cette difficulté est particulièrement accrue dans le cas des boîtes de vitesses montées en bout du moteur à combustion interne lorsque l'ensemble du groupe motopropulseur est agencé transversalement, l'espace disponible pour la conception du dispositif de commande étant alors particulièrement limité. Il s'avère donc nécessaire de résoudre le problème technique consistant à entraîner les deux rapports 5-AR sur une même ligne de sélection en bénéficiant des avantages de la grille à trois couloirs tout en évitant les mouvements parasites du rapport qui n'est pas engagé.

Le principe des solutions existantes consiste à éviter le déplacement parasite le plus pénalisant, c'est-à-dire celui du baladeur du rapport de marche arrière lors de l'engagement du cinquième rapport de marche avant.

Une première solution est décrite et représentée dans le document FR-A-2.299.562. Dans le couloir de sélection, ou ligne de sélection, un doigt entraîne la crosse du cinquième rapport de marche avant qui se trouve ainsi guidée et positionnée sur l'axe de la fourchette de cinquième rapport. Cette commande entraîne, lors du déplacement dans la direction opposée à celle correspondant à l'engagement du cinquième rapport, la commande d'engagement du rapport de marche arrière par une crosse dont le mouvement pivotant permet d'éviter la transmission du mouvement dans l'autre sens grâce à un dispositif par pion et came. On réalise donc en fait un dispositif de débrayage qui dans sa conception la plus simple utilise la rotation du basculeur du rapport de marche arrière. Il suffit ainsi de s'assurer que la face de dégagement de la marche arrière formée dans le profil de came vienne s'effacer lors du retour au point mort. Toutefois cette architecture n'est utilisable que lorsque le couvercle du carter de boîte de cinquième permet à la fourchette et au manchon de synchronisation du cinquième rapport cette "fausse course supplémentaire". Un tel agencement est impossible si la place disponible n'est pas suffisante dans le compartiment moteur notamment du fait de la proximité des pneus en position de braquage maximal.

Une autre solution a été proposée dans la demande de brevet français n° 87 07334 (FR-A-2 615 798) selon laquelle la course de sélection du rapport de marche arrière est légèrement supérieure à celle du cinquième rapport de marche avant. Dans ce cas on utilise quatre crosses indépendantes coulissantes parallèles en tentant d'imbriquer au maximum dans la direction axiale le cinquième rapport et la marche arrière pour tenter de réduire au minimum le décalage de sélection.

Une autre solution décrite par la demande de brevet français n° 85 11254 (FR-A-2 585 429) consiste à assurer une double indépendance des éléments entraînant l'une des fourchettes du cinquième rapport ou de la marche arrière que l'on entraîne tout en conservant la fourchette du cinquième rapport monté sur un axe coulissant. Ces deux débrayages sont obtenus à partir d'une crosse guidée et orientée sur un axe indépendant, le mouvement de passage étant transmis directement aux deux fourchettes réceptrices, le dégagement étant assuré par une noix pivotante montée en chape sur une rampe hélicoïdale. Les deux mouvements de rotation sont alors reportés sur cette pièce supplémentaire, le dispositif comportant également un moyen usuel d'interverrouillage des rapports. Toutefois cette solution est particulièrement complexe et présente une précision et une fiabilité insuffisantes.

La présente invention a pour but de proposer un dispositif qui permette de résoudre le problème technique évoqué plus haut tout en conservant une véritable grille à trois couloirs de sélection et à quatre crosses, dans le cas d'une boîte à cinq rapports de marche avant, et qui permette donc de bénéficier simultanément des avantages des différentes architectures évoquées précédemment.

Dans ce but le dispositif selon l'invention est caractérisé en ce que l'une des crosses, associée à un seul rapport est, à son point mort, écartée du plan passant par l'arbre de commande et perpendiculaire à la direction commune de coulissement des crosses, le doigt de commande étant, dans la position d'engagement de ce rapport, sensiblement perpendiculaire à cette direction commune de coulissement, la face de l'évidement de cette crosse pour le dégagement de ce rapport s'étendant sur une hauteur réduite de manière que le doigt de commande puisse pivoter librement au-delà de sa position angulaire de point mort dans le sens correspondant au dégagement de ce rapport sans que son extrémité libre interfère avec ladite face de dégagement.

Selon d'autres caractéristiques de l'invention :
- un rapport supplémentaire est commandé par un basculeur monté pivotant autour d'un axe du carter de boîte et dont une extrémité libre comporte un évidement en forme de U dont les deux branches délimitent des faces parallèles d'engagement et/ou de dégagement de ce rapport supplémentaire qui sont parallèles audit axe de pivotement, l'extrémité libre du doigt de commande étant simultanément reçue dans les évidements de la crosse et du basculeur, la face de ce dernier pour le dégagement du rapport supplémentaire s'étendant sur une hauteur réduite de manière que le doigt de commande puisse pivoter librement par rapport au basculeur au-delà de sa position angulaire de point mort dans le sens correspondant à l'engagement dudit rapport et au dégagement du rapport supplémentaire sans que son extrémité libre interfère avec la face de dégagement de l'évidement du basculeur ;
- l'axe de pivotement du basculeur est parallèle à l'axe de rotation de l'arbre de commande et l'extrémité du basculeur dans laquelle est formé l'évidement pivote au voisinage d'un plan parallèle à la direction de coulissement de ladite crosse ;
- l'axe de pivotement du basculeur est perpendiculaire à l'axe de rotation de l'arbre de commande et l'extrémité du basculeur dans laquelle est formé l'évidement pivote dans un plan parallèle à la direction de coulissement de ladite crosse ; et
- ledit rapport est un rapport de marche avant et le rapport supplémentaire est le rapport de marche arrière de la boîte de vitesses.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en bout selon la flèche F de la figure 2 d'une partie d'un dispositif de commande d'une boîte de vitesses réalisé conformément aux enseignements de l'invention ;
- la figure 2 est une vue en section selon la ligne 2-2 de la figure 1 ;
- la figure 3 est une vue en bout similaire à celle de la figure 1 sur laquelle on a représenté un premier mode de réalisation du basculeur de sélection et de passage du rapport de marche arrière ;
- la figure 4 est une vue similaire d'un détail de la figure 3 montrant la coopération de la crosse du cinquième rapport de marche avant et du basculeur de marche arrière avec une ancre d'interverrouillage ;
- la figure 5 est une vue de dessus des crosses de sélection du dispositif de commande qui diffère de celui représenté aux figures 1 à 4 par le second mode de réalisation du basculeur de marche arrière ;
- la figure 6 est une vue schématique de la grille de sélection et de passage des rapports correspondant au dispositif de commande de la figure 5 ;
- la figure 7 est une vue similaire à celle de la figure 5 dans laquelle le cinquième rapport de marche avant est engagé ;
- la figure 8 est une vue similaire à celle de la figure 5 dans laquelle le rapport de marche arrière est engagé ;
- la figure 9 est une vue en section selon la ligne 9-9 de la figure 8 ;
- la figure 10 est une vue en section selon la ligne 10-10 de la figure 8 ;
- les figures 11 et 12 sont des vues similaires à celles de la figure 5 représentant un autre agencement des crosses et du basculeur et leur coopération avec des moyens d'interverrouillage ;
- la figure 13 est une vue en bout du dispositif de la figure 12 montrant la coopération d'une ancre d'interverrouillage avec la crosse de sélection du cinquième rapport de marche avant ;
- la figure 14 est un schéma simplifié représentant un détail de réalisation du doigt de commande et de la crosse de cinquième rapport de marche avant ;
- la figure 15 est une vue en bout similaire à celle de la figure 13 montrant une variante de réalisation des moyens d'interverrouillage, le doigt de sélection et de passage étant dans sa position de point mort et ;
- la figure 16 est une vue similaire à celle de la figure 15 dans laquelle le cinquième rapport est en position engagée.

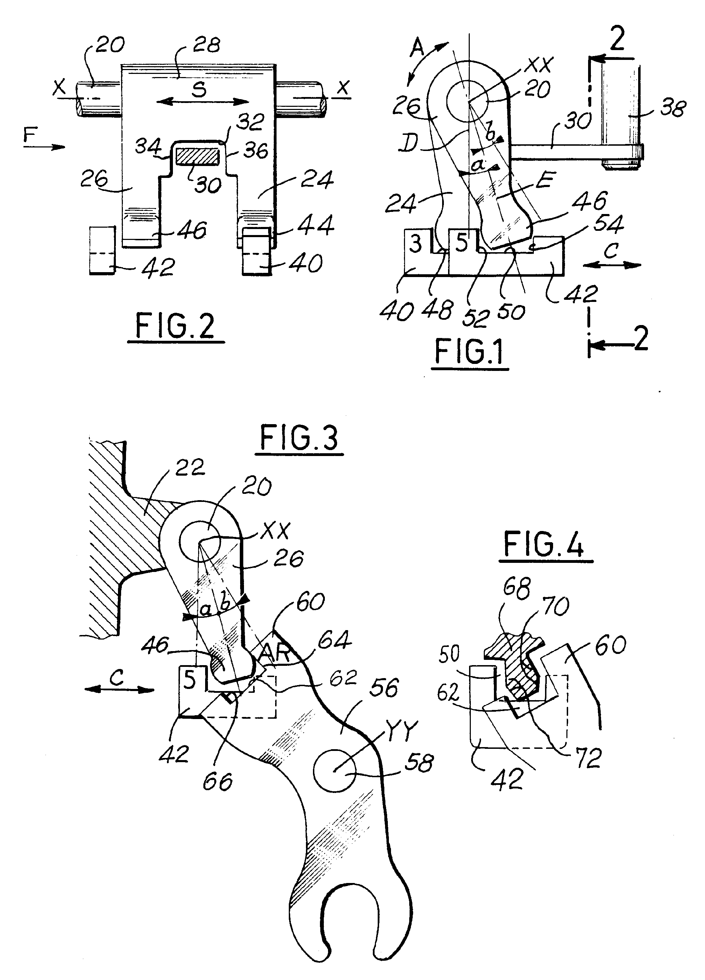

On reconnaît aux figures 1 et 2 un arbre de commande 20 qui est monté pivotant autour de son axe X-X dans un carter de boîte de vitesses 22 (figure 3) et qui permet la sélection et le passage des différents rapports de la boîte de vitesses. L'arbre 20 est généralement monté à rotation et coulissant dans deux paliers du carter 22. Un fourreau de commande peut également être monté sur l'arbre de commande auquel il est lié en rotation et en translation.

Dans le mode de réalisation représenté aux figures, deux doigts de commande 24 et 26 sont liés en rotation et en translation à l'arbre 20 au moyen du manchon 28 qui les relie entre eux.

Les déplacements latéraux, c'est-à-dire selon la direction X-X, sont assurés au moyen d'un levier de sélection 30 qui est reçu dans une échancrure 32 du manchon dont deux épaulements opposés 34 et 36 perpendiculaires à l'axe X-X sont prévus pour coopérer avec les faces en vis-à-vis du levier de sélection 30.

Le déplacement du levier 30 sous l'action d'un organe de commande 38 relié au levier de changement de vitesses, selon la direction de sélection S parallèle à l'axe X-X permet donc le déplacement simultané dans l'un ou l'autre sens des deux doigts de sélection et de passage 24 et 26. Le passage se fait par la commande en rotation des deux doigts autour de l'axe X-X selon la flèche A de la figure 1.

On a représenté aux figures 1 et 2 deux crosses coulissantes de sélection 40 et 42. Les crosses 40 et 42 sont parallèles et peuvent coulisser selon une direction commune de coulissement C perpendiculaire à l'axe X-X.

La crosse 40 est associée aux troisième et quatrième rapports de marche avant de la boîte de vitesses tandis que la crosse 42 est associée au seul cinquième rapport de marche avant.

Les deux crosses 40 et 42 sont séparées axialement par une distance supérieure à celle séparant les deux doigts de commande 24 et 26 de manière que les extrémités libres 44 et 46 de ceux-ci ne puissent pas être engagées simultanément dans les évidements 48 et 50 des crosses 40 et 42.

D'une manière classique, l'évidement 48 est en forme de U dont les branches forment deux faces parallèles d'engagement et de dégagement des troisième et quatrième rapports de marche avant avec lesquels est susceptible de coopérer alternativement l'extrémité libre 44 du doigt de commande 24.

Dans la position représentée aux figures 1 et 2, le doigt 24 est représenté en position de sélection des troisième ou quatrième rapports de marche avant et au point mort. Dans cette position le doigt 24 s'étend selon une direction D sensiblement perpendiculaire à la direction de coulissement C des crosses 40 et 42.

Pour cette même position angulaire de point mort du doigt 24 et de l'arbre de commande 20, le doigt de commande 26 est décalé angulairement par rapport au doigt 24. Ainsi la direction générale E du doigt de commande de la crosse 42 forme un angle "a" par rapport à la direction D.

La position de point mort de la crosse 42 est, comme on peut le voir à la figure 1, décalée de manière correspondante par rapport à celle de la crosse 40 parallèlement à la direction de coulissement commune des crosses 40 et 42.

L'évidement 50 en forme de U de la crosse 42 délimite deux faces parallèles et opposées 52 et 54 qui s'étendent dans des plans perpendiculaires à la direction de coulissement C et parallèles à l'axe de sélection X-X.

La face de gauche 52, en considérant la figure 1, permet l'engagement du cinquième rapport de marche avant sous l'action de l'extrémité libre 46 du doigt de commande 26 par pivotement de ce dernier autour de l'axe X-X dans le sens horaire d'un angle sensiblement égal à l'angle "a".

Comme on le voit à la figure 1, la hauteur de la face de dégagement 54 du cinquième rapport de marche avant est inférieure à celle de la face d'engagement 52.

Grâce à cette caractéristique, le doigt de commande 26 peut pivoter dans le sens anti-horaire, correspondant au sens de dégagement du cinquième rapport de marche avant, depuis sa position de point mort représentée à la figure 1 sans que son extrémité libre 46 interfère avec la face de dégagement 54. C'est cette possibilité de pivotement libre supplémentaire d'un angle "b" du doigt de commande 26 qui est utilisée pour provoquer l'engagement du rapport de marche arrière lorsque le doigt de commande 26 est dans sa position de sélection du cinquième rapport de marche avant engagé dans l'évidement 50.

La commande du rapport de marche arrière peut par exemple être effectuée, comme cela est représenté à la figure 3, au moyen d'un basculeur 56 qui est monté pivotant dans le carter 22 autour d'un axe de pivotement 58 dont l'axe géométrique Y-Y est parallèle à l'axe X-X de l'arbre de commande 20.

Le basculeur 56 est un levier du premier type dont l'extrémité libre 60 s'étend près de la crosse 42, dans un plan parallèle à la direction de coulissement C de cette crosse.

L'extrémité 60 comporte un évidement 62 en forme de U dont la branche de droite 64 délimite la face d'engagement du rapport de marche arrière avec laquelle coopère l'extrémité 46 du doigt 26 pour faire pivoter le basculeur 56 dans le sens horaire autour de, son axe Y-Y. La branche opposée du U délimite la face de dégagement parallèle 66 du rapport de marche arrière avec laquelle peut coopérer l'extrémité libre 46 du doigt de commande 26.

A la figure 3 le basculeur est représenté dans sa position de point mort et l'on constate que, comme dans le cas de la crosse 42, la face de dégagement 66 s'étend sur une hauteur réduite par rapport à la face 64 de manière que l'extrémité libre 46 du doigt 26 n'interfère pas avec cette face lorsque le doigt de commande 26 pivote autour de l'axe X-X dans le sens horaire depuis sa position de point mort, c'est-à-dire dans le sens correspondant à l'engagement du cinquième rapport de marche avant.

On a ainsi réalisé avec un seul couloir de sélection une commande du cinquième rapport de marche avant et de la marche arrière sans interférence lors du mouvement de passage de l'un ou de l'autre de ces rapports.

D'une manière connue des moyens d'interverrouillage de sélection sont agencés sous la forme d'ancres d'interverrouillage. Une ancre est une pièce portée par l'arbre de commande 20 sur lequel elle coulisse mais auquel elle n'est pas liée en rotation. Elle s'étend axialement de part et d'autre des doigts de commande 24 et 26, empêchant le coulissement des crosses qui ne sont pas alignées avec le doigt 24 ou le doigt 26.

Dans le cadre de l'invention, l'ancre d'interverrouillage 68 comporte des paires de faces inclinées opposées 70 et 72 pour pouvoir coopérer avec les faces correspondantes des évidements 50 et 62.

Les angles "a" et "b" peuvent par exemple être sensiblement égaux à 15°.

Dans le mode de réalisation représenté aux figures 5 à 12, l'axe Y-Y du basculeur de marche arrière 56 est perpendiculaire à l'axe de l'arbre de commande 20 et l'extrémité 60 du basculeur se déplace près de la crosse 42 au voisinage d'un plan parallèle à la direction C de coulissement des crosses 40 et 42.

Le basculeur 56 est représenté dans sa position de point mort à la figure 5, une position correspondant à l'engagement de la marche arrière étant représentée en silhouette.

On a également représenté sur cette figure la crosse 73 de sélection des deux premiers rapports de marche avant.

Grâce à cet agencement, et comme cela est illustré à la figure 6, l'on obtient un couloir de sélection du cinquième rapport de marche avant plus large que celui du rapport de marche arrière ce qui, du fait du rappel en sélection, permet d'assurer une butée en dégagement du cinquième rapport de marche avant empêchant toute interférence accidentelle avec la marche arrière (voir figure 7).

Le basculeur 56 possède à son extrémité libre une saillie 75 qui s'étend en direction de la crosse 42 et avec laquelle peut coopérer l'extrémité libre 46 du doigt de commande 26 lorsque le cinquième rapport de marche avant est engagé pour assurer le verrouillage en direction du passage de la marche arrière (voir figure 7).

Lorsque le rapport de marche arrière est engagé comme cela est représenté à la figure 8, le verrouillage de sécurité du cinquième rapport de marche avant est assuré grâce à une face d'appui supplémentaire 71 prévue sur la crosse 42 qui s'étend parallèlement à la face de hauteur réduite 54 et contre laquelle vient buter le doigt 46 lorsqu'il a atteint sa position angulaire maximale dans le sens anti-horaire correspondant à l'engagement de la marche arrière (voir figures 8 à 10).

Dans le mode de réalisation représenté notamment aux figures 7 et 9, le doigt de commande 46 travaille entre 0° et 30° tandis que son dégagement de l'évidement 62 est assuré par la rotation du basculeur et non plus par celle du doigt de commande. Tout en conservant la même implantation du basculeur avec son axe perpendiculaire à celui de l'arbre de commande, il est possible de prévoir de l'entraîner par le doigt de commande pour le passage et la sélection des quatre premiers rapports de marche avant qui est sensiblement perpendiculaire à la direction de coulissement C dans la position de point mort.

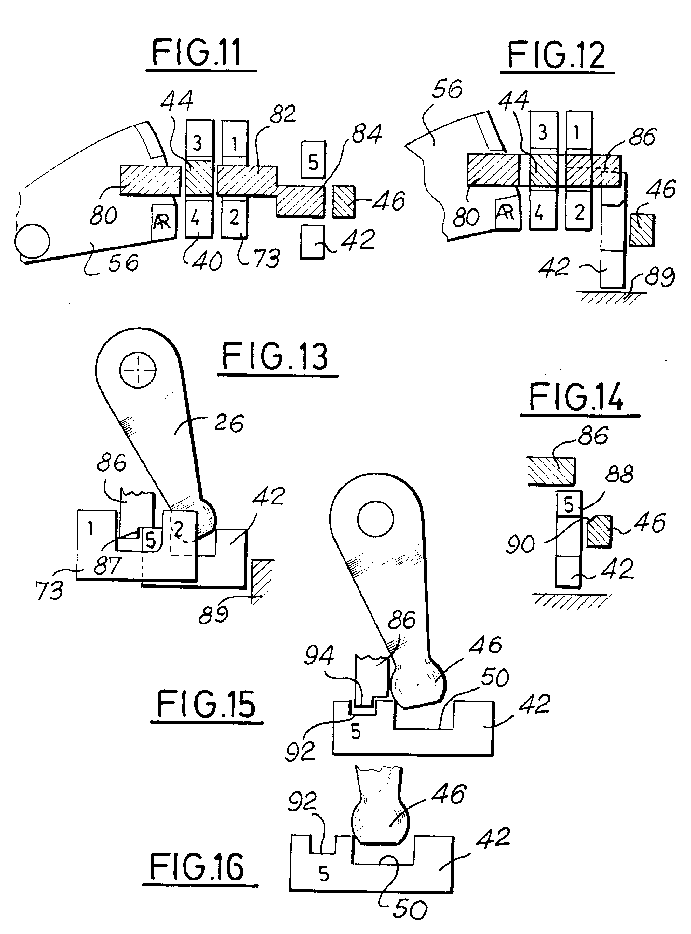

Un tel agencement, représenté suivant deux modes de réalisation aux figures 11 et 12, procure un rendement optimal en effort pour la commande de l'engagement de la marche arrière.

En position de sélection du cinquième rapport de marche avant ou de la marche arrière le doigt de commande 24, 44 se trouve en face de la marche arrière et l'autre doigt 26, 46 se trouve engagé dans la crosse 42, ce qui permet de revenir à des largeurs axiales des doigts de commande et des crosses identiques entre elles.

Dans ce mode de réalisation, la difficulté principale réside dans la conception de l'ancre d'interverrouillage 80, 82, 84 qui coulisse avec les doigts 24, 44 et 26, 46.

En effet, si on prévoit des blocs d'interverrouillage indépendants 80 et 84 pour contrôler les deux doigts, ceux-ci doivent être écartés au moins de quatre largeurs de crosse (voir figure 11) et nécessitent des usinages et un montage délicat.

Ce choix de blocs indépendants n'est pas souhaitable. En fait la crosse de sélection et de passage du cinquième rapport de marche avant n'a besoin d'être verrouillée que dans un sens ce qui rend possible l'utilisation d'un même bloc d'interverrouillage 86 comme cela est représenté aux figures 12 et 13.

Dans ce cas la crosse bute, dans sa position de point mort, d'un côté sur une partie fixe 89 du carter, et de l'autre côté sur un rebord échancré 87 de l'ancre 86, et l'entrée du doigt de commande 46 dans cette crosse s'effectue de préférence à l'aide de chanfreins 88 et 90 prévus d'un seul côté comme cela est représenté à la figure 14.

Une autre solution (voir figures 15 et 16) consiste à prévoir une encoche 92 en forme de U dans la crosse 42 qui coopère avec un tenon 94 de l'ancre 86 comme cela est représenté à la figure 15 pour assurer le verrouillage de cette crosse dans sa position de point mort (Fig.15), le bloc 86 étant dégagé avec son tenon 94 de l'encoche 92 pour permettre l'engagement du cinquième rapport de marche avant (Fig.16)

## Revendications

1. Dispositif de commande d'une boîte de vitesses de véhicule automobile dans laquelle des éléments mobiles d'engagement et de dégagement des rapports sont déplacés à l'aide de crosses (40, 42, 73) coulissantes parallèles susceptibles de coulisser selon une direction commune de coulissement (C) dans au moins un sens à partir d'une position de point mort, chaque crosse comportant un évidement (50, 62) en forme de U dont les branches délimitent des faces parallèles (52, 54, 64, 66) d'engagement et/ou de dégagement de rapports qui sont perpendiculaires à la direction commune de coulissement (C) des crosses, avec un doigt de commande (24, 26) dont l'extrémité libre (44, 46) est susceptible d'être reçue dans au moins l'un desdits évidements pour coopérer avec lesdites faces et qui pivote pour provoquer le passage d'un rapport, ce doigt étant lié en rotation et en translation à un arbre de commande (20) qui coulisse, perpendiculairement à la direction commune de coulissement (C) des crosses, pour permettre l'engagement du doigt de commande dans au moins l'une des crosses en vue de la sélection d'au moins un rapport, caractérisé en ce que l'une (42) des crosses associée à un seul rapport (5) est, à son point mort, écartée du plan passant par l'arbre de commande (20) et perpendiculaire à ladite direction commune de coulissement (C) des crosses, le doigt de commande (26) étant, dans la position d'engagement de ce rapport, sensiblement perpendiculaire à cette direction commune de coulissement, la face (54) de l'évidement (50) de cette crosse (42) pour le dégagement de ce rapport s'étendant sur une hauteur réduite de manière que le doigt de commande puisse pivoter librement au-delà de sa position angulaire de point mort dans le sens correspondant au dégagement de ce rapport sans que son extrémité libre (46) interfère avec ladite face de dégagement (54).

2. Dispositif de commande d'une boîte de vitesses selon la revendication 1, caractérisé en ce qu'un rapport supplémentaire (AR) est commandé par un basculeur (56) monté pivotant autour d'un axe (58) du carter (22) de boîte et dont une extrémité libre (60) comporte un évidement (62) en forme de U dont les branches délimitent des faces parallèles (64, 66) respectivement d'engagement et de dégagement de ce rapport supplémentaire qui sont parallèles audit axe de pivotement, l'extrémité libre (46) du doigt de commande étant simultanément reçue dans les évidements (50) de la crosse et (62) du basculeur, la face (66) de ce dernier pour le dégagement du rapport supplémentaire (AR) s'étendant sur une hauteur réduite de manière que le doigt de commande puisse pivoter librement par rapport au basculeur (56) au-delà de sa position angulaire de point mort dans le sens correspondant à l'engagement dudit rapport et au dégagement du rapport supplémentaire sans que son extrémité libre (46) interfère avec la face de dégagement (66) de l'évidement (62) du basculeur.

3. Dispositif de commande d'une boîte de vitesses selon la revendication 2, caractérisé en ce que l'axe de pivotement (58) du basculeur est parallèle à l'axe de rotation (X-X) de l'arbre de commande (20) et en ce que l'extrémité (60) du basculeur dans laquelle est formé l'évidement pivote dans un plan parallèle à la direction de coulissement (C) de ladite crosse (42).

4. Dispositif de commande d'une boîte de vitesses selon la revendication 2, caractérisé en ce que l'axe de pivotement (58) du basculeur est perpendiculaire à l'axe de rotation (X-X) de l'arbre de commande (20) et en ce que l'extrémité (60) du basculeur dans laquelle est formé l'évidement (62) pivote au voisinage d'un plan parallèle à la direction de coulissement (C) de ladite crosse (42).

5. Dispositif de commande d'une boîte de vitesses selon l'une quelconque des revendications 2 à 4, caractérisé en ce que ledit rapport est un rapport de marche avant et en ce que le rapport supplémentaire est le rapport de marche arrière de la boîte de vitesses.

## Patentansprüche

1. Vorrichtung zur Betätigung eines Kraftfahrzeug-Getriebes, bei welchem bewegliche Einrück- und Ausrückelemente für die Gänge mittels paralleler gleitender Kreuzköpfe (40, 42, 73) verschoben werden, die in einer gemeinsamen Gleitrichtung (C) in wenigstens einer Richtung ausgehend von einer Totpunktstellung gleiten können, wobei jeder Kreuzkopf eine Ausnehmung (50, 62) in Form eines U aufweist, dessen Schenkel parallele Gangeinrück- und/oder -ausrückflächen (52, 54, 64, 66) bestimmen, die senkrecht zur gemeinsamen Gleitrichtung (C) der Kreuzköpfe sind, mit einem Betätigungsfinger (24, 26), dessen freies Ende (44, 46) in wenigstens einer der Ausnehmungen mit den Flächen zusammenwirkend aufgenommen werden kann und der zum Hervorrufen des Schaltens eines Ganges schwenken kann, wobei der Finger dreh- und verschiebefest mit einer Betätigungswelle (20) verbunden ist, die senkrecht zur gemeinsamen Gleitrichtung (C) der Kreuzköpfe gleitet, damit der Betätigungsfinger in wenigstens einen der Kreuzköpfe im Hinblick auf die Auswahl des wenigstens einen Ganges eingreifen kann, dadurch gekennzeichnet, daß der eine (42) der Kreuzköpfe, der einem einzigen Gang (5) zugeordnet ist, an seinem Totpunkt von der durch die Betätigungswelle (20) gehenden und zur gemeinsamen Gleitrichtung (C) der Kreuzköpfe senkrechten Ebene entfernt ist, wobei der Betätigungsfinger (26) in der Einrückstellung dieses Ganges im wesentlichen senkrecht zu dieser gemeinsamen Gleitrichtung steht, wobei die Fläche (54) der Ausnehmung (50) dieses Kreuzkopfes (42) für das Ausrücken dieses Ganges sich auf einer verminderten Höhe erstreckt, derart, daß der Betätigungsfinger frei über seine Totpunkt-Winkellage in der Richtung, die dem Ausrücken dieses Ganges entspricht, schwenken kann, ohne daß sein freies Ende (46) sich mit der Ausrückfläche (54) stört.

2. Betätigungsvorrichtung für ein Getriebe nach Anspruch 1, dadurch gekennzeichnet, daß ein zusätzlicher Gang (AR) durch einen Kipphebel (56) betätigt wird, der um eine Achse (58) des Getriebegehäuses (22) schwenkend angebracht ist und bei dem ein freies Ende (60) eine Ausnehmung (62) in Form eines U aufweist, dessen Schenkel parallele Flächen (64, 66) zum Einrücken bzw. Ausrücken dieses zusätzlichen Ganges bestimmen, die parallel zu der Schwenkachse sind, wobei das freie Ende (46) des Betätigungsfingers gleichzeitig in den Ausnehmungen (50) des Kreuzkopfes und (62) des Kipphebels aufgenommen sind, wobei die Fläche (66) des letzteren für das Ausrücken des zusätzlichen Ganges (AR) sich in einer verminderten Höhe erstreckt, derart, daß der Betätigungsfinger frei bezüglich des Kipphebels (56) über seine Totpunkt-Wwinkellage in der Richtung, die dem Einrücken des Ganges und dem Ausrücken des zusätzlichen Ganges entspricht, schwenken kann, ohne daß sein freies Ende (46) sich mit der Ausrückfläche (66) der Ausnehmung (62) des Kipphebels stört.

3. Betätigungsvorrichtung für ein Getriebe nach Anspruch 2, dadurch gekennzeichnet, daß die Schwenkachse (58) des Kipphebels parallel zur Drehachse (X-X) der Betätigungswelle (20) liegt, und daß das Ende (60) des Kipphebels, in dem die Ausnehmung ausgebildet ist, in einer zur Gleitrichtung (C) des Kreuzkopfes (42) parallelen Ebene schwenkt.

4. Betätigungsvorrichtung für ein Getriebe nach Anspruch 2, dadurch gekennzeichnet, daß die Schwenkachse (58) des Kipphebels senkrecht zur Drehachse (X-X) der Betätigungswelle (20) liegt, und daß das Ende (60) des Kipphebels, in dem die Ausnehmung (62) ausgebildet ist, im Bereich einer zur Gleitrichtung (C) des Kreuzkopfes (42) parallelen Ebene schwenkt.

5. Betätigungsvorrichtung für ein Getriebe nach irgendeinem der Ansprüche 2 bis 4, dadurch gekennzeichnet, daß der Gang ein Vorwärtsgang ist und daß der zusätzliche Gang der Rückwärtsgang des Getriebes ist.

## Claims

1. Device for controlling a motor vehicle gear box in which movable members for the engagement and disengagement of the gear ratios are moved by means of parallel sliding crossheads (40, 42, 73) able to slide according to a common sliding direction (C) in at least one direction from a dead-centre position, each crosshead comprising a U-shaped recess (50, 62) whereof the legs define parallel faces (52, 54, 64, 66) for the engagement and/or disengagement of gear ratios, which are perpendicular to the common sliding direction (C) of the crossheads, with a control pin (24, 26) whereof the free end (44, 46) is able to be received in at least one of said recesses in order to cooperate with said faces and which pivots in order to cause the passage from one gear ratio, this pin being connected in rotation and translation to a control shaft (20) which slides, perpendicularly to the common sliding direction (C) of the crossheads, in order to allow the engagement of the control pin in at least one of the crossheads with a view to the selection of at least one gear ratio, characterised in that one (42) of the crossheads associated with a single gear ratio (5) is, at its dead-centre, separated from the plane passing through the control shaft (20) and perpendicular to said common sliding direction (C) of the crossheads, the control pin (26) being, in the position of engagement of this gear ratio, substantially perpendicular to this common sliding direction, the face (54) of the recess (50) of this crosshead (42) for the disengagement of this gear ratio extending over a reduced height in order that the control pin may pivot freely beyond its angular dead-centre position in the direction corresponding to the disengagement of this gear ratio without its free end (46) interfering with said disengagement face (54).

2. Device for controlling a gear box according to Claim 1, characterised in that an additional gear ratio (AR)
is controlled by a rocking lever (56) mounted to pivot about a shaft (58) of the gear box casing (22) and whereof one free end (60) comprises a U-shaped recess (62) whereof the legs define parallel faces (64, 66) respectively for the engagement and disengagement of this additional gear ratio, which are parallel to said pivot shaft, the free end (46) of the control pin being simultaneously received in the recesses (50) of the crosshead and (62) of the rocking lever, the face (66) of the latter for the disengagement of the additional gear ratio (AR) extending over a reduced height in order that the control pin is able to pivot freely with respect to the rocking lever (56) beyond its angular dead-centre position in the direction corresponding to the engagement of said gear ratio and to the disengagement of the additional gear ratio without its free end (46) interfering with the disengagement face (66) of the recess (62) of the rocking lever.

3. Device for controlling a gear box according to Claim 2, characterised in that the pivot shaft (58) of the rocking lever is parallel to the axis of rotation (X-X) of the control shaft (20) and in that the end (60) of the rocking lever in which the recess is formed, pivots in a plane parallel to the sliding direction (C) of said crosshead (42).

4. Device for controlling a gear box according to Claim 2, characterised in that the pivot shaft (58) of the rocking lever is perpendicular to the axis of rotation (X-X) of the control shaft (20) and in that the end (60) of the rocking lever in which the recess (62) is formed, pivots in the vicinity of a plane parallel to the sliding direction (C) of said crosshead (42).

5. Device for controlling a gear box according to one of Claims 2 to 4, characterised in that said gear ratio is a forward gear ratio and in that the additional ratio is the reverse gear ratio of the gear box.
